# EUROPEAN PATENT APPLICATION

(11) **EP 2 330 157 A1**
(43) Date of publication of application: **08.06.2011**
(21) Application number: 09802728.7
(22) Date of filing: 30.07.2009
(51) Int. Cl.: C08L 101/00, C08K 5/20, C08L 67/00, C08L 101/16

(54) **RESIN COMPOSITION AND SHEET**

(30) Priority: 01.08.2008 JP 2008199314
(71) Applicant: Kaneka Corporation, Osaka-shi, Osaka 530-8288 (JP)
(72) Inventor: NAKAMURA Nobuo, Osaka 566-0072 (JP)
(74) Representative: Vossius & Partner
(86) International application number: PCT/JP2009/003627
(87) International publication number: WO 2010/013483

(57) **Abstract**

A resin composition which is capable of achieving superior flexibility and tear resistivity as well as forming/molding processibility, while increasing the biomass content of the resin composition for the purpose of preventing global warming and the like, and a formed sheet product are provided. The present invention relates to a resin composition containing a petroleum derived resin having a glass transition temperature (hereinafter, referred to as Tg) of not higher than 10°C, and a nonpetroleum derived resin having a Tg of not higher than 10°C. A sheet is produced by subjecting the resin composition to forming/molding processing.

## Description

### Technical Field

The present invention relates to a resin composition having flexibility and a low glass transition temperature, and a sheet produced using the same.

### Background Art

Resinous materials having a low glass transition temperature (hereinafter, "glass transition temperature" being referred to as Tg) have been used hitherto after subjecting to forming/molding process into a variety of industrial products, taking advantage of their flexible characteristics. However, many of them have been petroleum derived resins made from fossil materials. It is not preferred to use petroleum derived resins in terms of carbon dioxide gas reduction since carbon dioxide which had been immobilized in the earth is obliged to be released into the ambient air. In light of prevention of global warming, the idea of attempting to control the amount of generation of carbon dioxide gas has spread worldwide, and thus activities seeking for declining use of petroleum derived resins have been growing. Reduction target value of the amount of carbon dioxide gas emission was presented in Kyoto Protocol came into effect on February 2005, and reduction target of the level of carbon dioxide gas emission was proposed to be directed by each main country also in Toyako Summit held on July 2008. Thus, to use nonpetroleum derived resins having a high biomass content has been socially desired nowadays.

On the other hand, although biodegradable resins have been used in recent years as candidates for solving plastic waste problems, most biodegradable soft materials have been derived from petroleum. In Patent Document 1, a film formed from a resin composition prepared by adding an inorganic filler to PBAT that is a petroleum derived biodegradable soft resin has been proposed; however, since the resin component is not a nonpetroleum derived component, it has been unsatisfactory in light of the biomass content. In addition thereto, when a film is produced by adding an inorganic filler to PBAT as disclosed in Patent Document 1, tear resistivity of the film is deteriorated; therefore, improvement of the same has been desired. Moreover, Patent Document 2 discloses a sheet formed from a resin composition prepared by mixing a polylactic acid that is a nonpetroleum derived biodegradable resin with a polyester having a Tg of not higher than 0°C; however, since the polylactic acid has a Tg of as high as 60°C, the sheet has inferior flexibility, still leading to unsatisfactory physical properties as a sheet.

### [Prior Art Documents]

### [Patent Documents]

Patent Document 1: JP-A No. 2005-192465
Patent Document 2: JP-A No. 2003-147177

### DISCLOSURE OF THE INVENTION

### Problems to be Solved by the Invention

In view of the foregoing problems, an object of the present invention is to provide a resin composition which is capable of achieving superior flexibility and tear resistivity as well as forming/molding processibility, while increasing the biomass content of the resin composition for the purpose of preventing global warming and the like, and further provide a formed sheet product.

### Means for Solving the Problems

As a result of investigation conducted elaborately in order to solve the foregoing problems, the present inventors found that a resin composition which is capable of achieving superior flexibility and tear resistivity while increasing the biomass content can be obtained by mixing a petroleum derived resin and a nonpetroleum derived resin both having a certain Tg, and that forming/molding processibility can be improved by further mixing a fatty acid amide. Accordingly, the present invention was accomplished.

More specifically, a first aspect of the present invention provides a resin composition containing a petroleum derived resin having a Tg of not higher than 10°C, and a nonpetroleum derived resin having a Tg of not higher than 10°C.
A second aspect of the present invention provides the resin composition according to the above aspect, in which the petroleum derived resin is a petroleum derived biodegradable resin.
A third aspect of the present invention provides the resin composition according to the above aspect, in which the petroleum derived biodegradable resin is at least one selected from the group consisting of polybutylene adipate terephthalate, polybutylene succinate adipate, polybutylene succinate, and polycaprolactone.
A fourth aspect of the present invention provides the resin composition according to the above aspect, in which the nonpetroleum derived resin is a nonpetroleum derived biodegradable resin.
A fifth aspect of the present invention provides the resin composition according to the above aspect, in which the nonpetroleum derived biodegradable resin is an aliphatic polyester copolymer having a repeating unit represented by the formula: [-CHR-CH₂-CO-O-], wherein, R represents an alkyl group represented by CₙH₂ₙ₊₁, and n is an integer of 1 to 15.
A sixth aspect of the present invention provides the resin composition according to the above aspect, in which the aliphatic polyester copolymer is poly(3-hydroxybutyrate-co-3-hydroxyhexanoate).
A seventh aspect of the present invention provides the resin composition according to the above aspect, in which the composition ratio of the copolymerization components of the poly(3-hydroxybutyrate-co-3-hydroxyhexanoate) is poly(3-hydroxybutyrate)/poly(3-hydroxyhexanoate) = 99/1 to 80/20 (mol/mol).
An eighth aspect of the present invention provides the resin composition according to the above aspect, further containing a fatty acid amide.
A ninth aspect of the present invention provides the resin composition according to the above aspect, in which the content of the fatty acid amide is 0.1 parts by weight to 10 parts by weight relative to 100 parts by weight of the nonpetroleum derived resin.
A tenth aspect of the present invention provides the resin composition according to the above aspect, in which the fatty acid amide is at least one of behenic acid amide and stearic acid amide.
An eleventh aspect of the present invention provides a sheet produced by subjecting the resin composition according to the above aspect to a forming processing.

### Effects of the Invention

According to the present invention, a resin composition which is capable of achieving superior flexibility and tear resistivity as well as forming/molding processibility, while increasing the biomass content of the resin composition for the purpose of preventing global warming, and the like, and a formed sheet product can be provided.

### Mode for Carrying Out the Invention

Hereinafter, the present invention is explained in more detail.

The resin composition of the present invention contains a petroleum derived resin having a glass transition temperature (hereinafter, referred to as Tg) of not higher than 10°C, and a nonpetroleum derived resin having a Tg of not higher than 10°C. The resin components in the resin composition of the present invention preferably consist of only the petroleum derived resin having a Tg of not higher than 10°C, and the nonpetroleum derived resin having a Tg of not higher than 10°C.

Although the petroleum derived resin used in the present invention is not particularly limited as long as it has a Tg of not higher than 10°C, the Tg is preferably not higher than 0°C, and more preferably not higher than -20°C. Although the lower limit of the Tg is not particularly limited, it is preferably, for example, not lower than -80°C. In addition, for increasing the biomass content, the petroleum derived resin preferably has biodegradability. Examples of the petroleum derived resin having a Tg of not higher than 10°C and having biodegradability include polybutylene adipate terephthalate (abbreviation: PBAT), polybutylene succinate adipate (abbreviation: PBSA), polybutylene succinate (abbreviation: PBS) and polycaprolactone (abbreviation: PCL), and at least one selected from the group consisting of them may be used. In particular, polybutylene adipate terephthalate is preferred. Polybutylene adipate terephthalate refers to a random copolymer of 1,4-butanediol, adipic acid and terephthalic acid, and particularly, PBAT obtained by a reaction of (a) a mixture essentially consisting of 35 to 95% by mole of adipic acid or an ester-forming derivative thereof or a mixture of the same, and 5 to 65% by mole of terephthalic acid or an ester-forming derivative thereof or a mixture of the same (sum total of % by mole of respective components being 100% by mole), and (b) a mixture containing butanediol (however, the molar ratio of (a) to (b) being 0.4:1 to 1.5:1), as disclosed in Japanese Unexamined Patent Application (Translation of PCT Application), Publication No. H10-508640 or the like is preferred. Commercially available products of PBAT are exemplified by Ecoflex (registered trademark) manufactured by BASF Ltd., and the like.

Although the nonpetroleum derived resin used in the present invention is not particularly limited as long as it has a Tg of not higher than 10°C, the Tg is preferably not higher than 0°C. Although the lower limit of the Tg is not particularly limited, it is preferably, for example, not lower than -80°C. Still more, in light of global environmental aspect such as solution of problems of plastic waste, etc., the nonpetroleum derived resin preferably has biodegradability. As the nonpetroleum derived resin having a Tg of not higher than 10°C and having biodegradability, aliphatic polyester copolymers (hereinafter, referred to as poly(3-hydroxyalkanoate) ; abbreviation: P3HA) having a repeating unit represented by the formula: [-CHR-CH₂-CO-O-] (wherein, R represents an alkyl group represented by CₙH₂ₙ₊₁, and n is an integer of 1 to 15) are preferred. When P3HA is used, the Tg is preferably -2°C to 4°C, and more preferably -0.5°C to 2.5°C in light of ease in culture and purification.

Specific examples of P3HA include copolymers of 3-hydroxybutyrate with at least one monomer selected from the group consisting of 3-hydroxypropionate, 3-hydroxyvalerate, 3-hydroxyhexanoate, 3-hydroxyheptanoate, 3-hydroxyoctanoate, 3-hydroxynonanoate, 3-hydroxydecanoate, 3-hydroxydodecanoate, 3-hydroxydodecenoate, 3-hydroxytetradecanoate, 3-hydroxyhexadecanoate and 3-hydroxyoctadecanoate, and preferable examples include copolymers of 3-hydroxybutyrate with at least one monomer selected from the group consisting of 3-hydroxyvalerate, 3-hydroxyhexanoate and 3-hydroxyoctanoate.

In particular, in light of the physical properties and productivity, poly(3-hydroxybutyrate-co-3-hydroxyhexanoate) (abbreviation: PHBH, n = 1 and 3 in the above formula) is most preferred.

With respect to the composition ratio of the copolymerization components in the PHBH described above, poly(3-hydroxybutyrate)/ poly(3-hydroxyhexanoate) is preferably 99/1 to 80/20 (mol/mol) in light of the physical properties of the resin composition.

Although the molecular weight of such P3HA is not particularly limited, in light of forming/molding processibility, the weight average molecular weight is preferably 300,000 to 3,000,000, more preferably 400,000 to 2,500,000, and still more preferably 500,000 to 2,000,000. When the weight average molecular weight of PHA is less than 300,000, mechanical characteristics such as strength may be insufficient. Whereas, when the weight average molecular weight exceeds 3,000,000, forming/molding processibility may be inferior.

It should be noted that the method of measuring the weight average molecular weight of the PHA is not particularly limited, but in one example, determination may be made as a molecular weight in terms of the polystyrene equivalent measured with a GPC system manufactured by Waters Corporation equipped with a column Shodex K-804 (polystyrene gel) manufactured by Showa Denko K.K., using chloroform as a mobile phase.

In the resin composition of the present invention, the composition ratio of the petroleum derived resin having a Tg of not higher than 10°C to the nonpetroleum derived resin having a Tg of not higher than 10°C is preferably about 10/90 to 90/10, and more preferably 25/75 to 75/25 on weight basis in light of the balance of physical properties and formability, and the polymer biomass content. It is preferred that the resin composition of the present invention further contains a fatty acid amide in light of improvement of productivity as a T die take-up speed in sheet forming is accelerated.

The fatty acid amide is exemplified by a compound represented by the formula: R-C (=O)-NR¹R². Herein, R, R¹, and R² each independently represent a hydrogen atom, or a hydrocarbon group having 1 to 30 carbon atoms. In the present invention, the hydrocarbon group may be either saturated or unsaturated. Also, the hydrocarbon group may not have a substituent, or may have a substituent such as a hydroxyl group, an alkoxy group, a halogen group, a carboxyl group, an amino group or an amide group. Furthermore, R and R¹ or R² may bind to form a cyclic structure.

Specific examples of the fatty acid amide include palmitic acid amide, stearic acid amide, erucic acid amide, behenic acid amide, ricinoleic acid amide, hydroxystearic acid amide, N-oleyl palmitic acid amide, N-stearylerucic acid amide, methylene bislauric acid amide, methylene bisstearic acid amide, methylene bishydroxystearic acid amide, ethylene bisoleic acid amide, ethylene biserucic acid amide, ethylene bisstearic acid amide, ethylene bislauric acid amide, ethylene biscapric acid amide, ethylene biscaprylic acid amide, ethylene bishydroxystearic acid amide, N,N'-distearylsebacic acid amide, hexanemethylene bisstearic acid amide, and the like. The fatty acid amide may be used alone, or multiple types thereof may be used in combination.

Among the fatty acid amides, primary amides represented by the above formula are preferred in which R represents an aliphatic hydrocarbon group having 1 to 30 carbon atoms (particularly having 10 to 20 carbon atoms), and R¹ and R² represent a hydrogen atom. In particular, behenic acid amide, stearic acid amide, ethylene bisstearic acid amide, hydroxystearic acid amide and methylolbehenic acid amide are preferred, and behenic acid amide and stearic acid amide are particularly preferred.

The content of the fatty acid amide in the resin composition of the present invention is preferably 0.1 parts by weight to 10 parts by weight, and more preferably 1 to 5 parts by weight relative to 100 parts by weight of the nonpetroleum derived resin. When the content is less than 0.1 parts by weight, the productivity may be deteriorated. Whereas, when the content is greater than 10 parts by weight, bleeding toward the surface and the physical properties of the molded product may be deteriorated.

To the resin composition of the present invention may be added a known thermoplastic resin or thermosetting resin in the range not to inhibit the effect of the present invention. Typical examples of the thermoplastic resin include general-purpose thermoplastic resins such as polyvinyl chloride-based resins, polystyrene-based resins, ABS-based resins and the like, as well as general-purpose engineering plastics such as polyethylene terephthalate-based resins, polybutylene terephthalate-based resins, polycarbonate-based resins, polyamide-based resins and the like. In addition, epoxy resins and the like may be exemplified as a typical thermosetting resin.

Furthermore, a starch, or a modified starch may be also added thereto. The modified starch is exemplified by a modified starch obtained by subjecting a starch to a heat treatment at a high temperature to cause endothermic transition of the starch component leading to disordered molecules of the starch granules, or a modified starch obtained by subjecting a starch to a chemical reaction such as esterification, fatty acid esterification, etherification or graft polymerization.

Moreover, into the resin composition of the present invention may be added at least one of a filling agent or a filler used as a common additive; a colorant such as a pigment or a dye; an odor absorbent such as activated charcoal or zeolite; a flavor such as vanillin or dextrin; an antioxidant; an anti-oxidizing agent; a weather resistance improving agent; an ultraviolet ray absorbing agent; a plasticizer; a lubricant; a release agent; a water repellent agent; an antimicrobial agent; a slidability improving agent; and other secondary additive, as needed.

### <Production of Resin Composition>

The resin composition of the present invention may be produced by a known method. For example, as the method of heat melting and mixing, mixing by mechanical agitation with a single screw extruder, a twin screw extruder, a tank having a kneader, a gear pump, a kneading roll, a stirrer or the like; and application of a static mixer in which dividing and joining of the flow are repeated by a flow guide apparatus may be exemplified. In the case of heat melting, it is preferable to mix while paying attention to lowering of the molecular weight resulting from the thermal degradation. In addition, the resin composition of the present invention may be also obtained by dissolving in a solvent to permit dissolution and mixing, followed by removing the solvent.

Final resin composition may be also produced by forming a master batch with a combination of compositions of a part of each component used in the present invention beforehand, and thereafter adding the residual component(s) thereto. Thus, dispersibility of each component is improved, whereby forming/molding processibility can be improved.

### <Production of Molded Product Using Resin Composition>

The resin composition of the present invention may be subjected to forming/molding processing by a well-known forming/molding processing method. For example, blow molding, sheet forming, injection molding, blow molding, fiber spinning, extrusion foaming, beads foaming, and the like may be carried out.

Of these, sheet forming is particularly preferred, and specific processing method is exemplified by T die extrusion molding, calender molding, roll molding, and inflation molding. The lower limit of the molding temperature in the sheet forming may be a temperature of a higher value among the sum total of Tg plus 110°C, and the melting point of the resin contained therein, whereas the upper limit is preferably the thermal decomposition temperature of the resin contained therein. The molding temperature in the sheet forming when P3HA is used is preferably 130°C to 180°C. Moreover, the sheet obtained from the resin composition of the present invention can be subjected to thermal molding by heat, vacuum molding, press molding or the like. The sheet of the present invention corresponds to those having a thickness of not greater than 5 mm, and generally thinner ones which may be also referred to as a film may be involved.

The resin composition of the present invention may be formed into molded products such as sheets, as well as papers, tubes, plates, sticks, vessels, bags and accessories, and these molded products may be used alone. In addition, the resin composition of the present invention may be complexed with any of various types of fibers, strings, ropes, woven fabrics, knit fabrics, nonwoven fabrics, papers, sheets, tubes, plates, sticks, vessels, bags, accessories, foams and the like formed from a unitary substance other than the resin composition of the present invention, whereby the unitary substance may be used with improved physical properties of such a substance.

The sheet of the present invention can be suitably used in fields such as agriculture, fishery, forestry, horticulture, medicine, sanitary goods, food industry, clothing, nonclothing, packaging, automobile, building material, and others. For example, it may be used in applications such as multi-films for agriculture, fumigation sheets for forestry, binding tapes including flat yarns, etc., root wrapping films for garden plants, back sheets for diapers, sheets for wrapping, shopping bags, refuse bags, draining bags, and other compost bags.

### [EXAMPLES]

Hereinafter, the present invention is explained in more detail with reference to Examples, but the present invention is not in any way limited to these Examples. It should be noted that "part" and "%" in Examples are on a weight basis.

### <Compounds Used in Examples and Comparative Examples>

- behenic acid amide: "Incroslip B" manufactured by CRODA JAPAN K. K.
- stearic acid amide: "NEURON-2" manufactured by Nippon Fine Chemical Co., Ltd.
- PBAT: "ECOFLEX" manufactured by BASF Ltd.; evaluation revealed a Tg of -30°C.

### <Evaluation of Tg of PBAT and PHBH>

According to JIS K7121, the Tg was measured using a differential scanning calorimeter (manufactured by Seiko Electronics Co., Ltd., DSC200) in the temperature range of -50°C to 200°C at a rate of temperature rise of 10°C/min.

### <Evaluation of Tear Strength >

According to JIS K7128, a molded product obtained by sheet extrusion with a T die to give a thickness of 0.1 mm was stored in an atmosphere of a humidity of 50% at 23°C for 7 days, and thereafter a sample for determination of the tear strength in the MD (machine draw) direction was cut out from the molded product. Using AUTOGRAPH AG2000A manufactured by Shimadzu Corporation, tear strength was measured under a condition of a test speed of 200 mm/min.

### <Evaluation of Tensile Elongation Characteristics >

According to JIS K7113, a molded product obtained by sheet extrusion with a T die to give a thickness of 0.1 mm was stored in an atmosphere of a humidity of 50% at 23°C for 7 days, and thereafter a sample (small test piece No. 2(1/3) type) for determination of the tensile strength in the MD direction was cut out from the molded product. Using AUTOGRAPH AG2000A manufactured by Shimadzu Corporation, tensile elongation at break was measured under a condition of a test speed of 33 mm/min.

### <Polymer Biomass Content>

The weight proportion of the nonpetroleum derived resin in the resin components of each resin composition was defined as "polymer biomass content".

### (Production Example 1) Production of PHBH having a 3HH Proportion of 12 mol%

### <Production of Plasmid Vector for Gene Insertion>

As a DNA for insertion, a DNA having a base sequence including a promoter and a ribosome binding site of phaC of A. caviae was produced as in the following. PCR was carried out using primers set out in SEQ ID NO: 1 and SEQ ID NO: 2, with a genomic DNA of A. caviae as a template. The PCR involved (1) at 98°C for 2 min, followed by repeating 25 cycles of (2) at 98°C for 15 sec, at 60°C for 30 sec and at 68°C for 20 sec, and KOD-plus- (manufactured by Toyobo Co., Ltd.) was used as a polymerase. The DNA fragment obtained by the PCR was end-phosphorylated and digested with EcoRI. This DNA fragment was denoted as PAc-5P+Eco.

Next, a DNA insertion site was established immediately upstream of the initiation codon of a bktB gene of a chromosomal DNA of a KNK-005AS strain disclosed in JP-A No. 2008-029218, paragraph No. [0038], and a DNA having a base sequence upstream the initiation codon of the gene was produced according to the following procedure.

A DNA having the base sequence upstream the initiation codon of the bktB gene was obtained by carrying out PCR using primers set out in SEQ ID NO: 3 and SEQ ID NO: 4, with a genomic DNA of a KNK-005 strain disclosed in JP-A No. 2008-029218, paragraph No. [0036] as a source of the template DNA. The PCR involved (1) at 98°C for 2 min, followed by repeating 25 cycles of (2) at 98°C for 15 sec, at 64°C for 30 sec and at 68°C for 30 sec, and KOD-plus- was used as a polymerase. The DNA fragment obtained by the PCR was co-digested with two restriction enzymes of BamHI and EcoRI. This DNA fragment was denoted as PbktB-Bam+Eco.

PAc-5P+Eco and PbktB-Bam+Eco were ligated, and PCR was carried out using primers set out in SEQ ID NO: 3 and SEQ ID NO: 2, with the DNA produced in the ligation liquid as a template DNA. The PCR involved (1) at 98°C for 2 min, followed by repeating 25 cycles of (2) at 98°C for 15 sec, at 60°C for 30 sec and at 68°C for 50 sec, and KOD-plus- was used as a polymerase. The DNA fragment obtained by the PCR was end-phosphorylated and digested with BamHI. This DNA fragment was denoted as bPac-5P+Bam.

Next, a DNA having a base sequence downstream the initiation codon of the gene was produced. A DNA having the base sequence downstream the initiation codon of the bktB gene was obtained by carrying out PCR using primers set out in SEQ ID NO: 5 and SEQ ID NO: 6, with the genomic DNA of the KNK-005 strain as a source of the template DNA. The PCR involved (1) at 98°C for 2 min, followed by repeating 25 cycles of (2) at 98°C for 15 sec, at 64°C for 30 sec and at 68°C for 30 sec, and KOD-plus- was used as a polymerase. The DNA fragment obtained by the PCR was end-phosphorylated and digested with ClaI. This DNA fragment was denoted as ORF-5P+Cla.

Ligation of bPac-5P+Bam and ORF-5P+Cla was conducted, and PCR was carried out using primers set out in SEQ ID NO: 3 and SEQ ID NO: 6, with the DNA produced in the ligation liquid as a template DNA. The PCR involved (1) at 98°C for 2 min, followed by repeating 25 cycles of (2) at 98°C for 15 sec, at 60°C for 30 sec and at 68°C for 1 min and 30 sec, and KOD-plus- was used as a polymerase. The DNA fragment obtained by the PCR was co-digested with two restriction enzymes of BamHI and ClaI. This DNA fragment was subcloned into a vector pBluescript II KS (-) (manufactured by Toyobo Co., Ltd.) at a site generated by digestion with the same restriction enzymes. Thus obtained vector was denoted as bAO/pBlu. The base sequence was determined using a DNA sequencer 3130x1 Genetic Analyzer manufactured by Applied Biosystems, Inc., and confirmed to be identical with the base sequence of the DNA used as the template.

Subsequently, pSACKm disclosed in JP-A No. 2008-029218, paragraph No. [0037] was treated with a restriction enzyme NotI to excise a DNA fragment of about 5.7 kb including a kanamycin resistant gene and the sacB gene. The fragment was inserted into a site of bAO/pBlu cleaved with the same enzyme to produce a plasmid bAO/pBlu/SacB-Km for gene disruption and insertion.

### <Production of Gene-Inserted Strain, Pac-bktB/AS Strain>

Next, a bacterial strain, in which a DNA having a base sequence including a promoter and a ribosome binding site of phaC immediately upstream the initiation codon of the bktB gene was inserted, was produced using bAO/pBlu/SacB-Km with a KNK-005AS strain as a parent strain. An Escherichia coli S17-1 strain (ATCC 47005) was transformed with a plasmid bAO/pBlu/SacB-Km for gene insertion. Thus obtained transformant was subjected to mixed culture with the KNK-005AS strain on a Nutrient Agar medium (manufactured by Difco) to permit conjugational transfer. A bacterial strain grown on a Simmons' agar medium (2 g/L sodium citrate, 5 g/L sodium chloride, 0.2 g/L magnesium sulfate heptahydrate, 1 g/L ammonium dihydrogenphosphate, 1 g/L dipotassium hydrogen phosphate, and 15 g/L agar, pH: 6.8) supplemented with 250 mg/L of kanamycin was selected to acquire a strain in which the plasmid was incorporated into the KNK-005AS strain chromosome. After this strain was subjected to two-generation culture on a Nutrient Broth medium (manufactured by Difco), it was diluted and plated on a Nutrient Agar medium containing 15% sucrose, and the grown bacterial strain was selected to acquire a strain in which the second recombination occurred. Furthermore, a gene-inserted strain desired was isolated by analyzing with PCR.

This gene-inserted strain was termed as "Pac-bktB/AS strain", and the base sequence was determined using a DNA sequencer 3130x1 Genetic Analyzer to confirm to be a strain in which a DNA having the base sequence including a promoter and a ribosome binding site of phaC was inserted immediately upstream the initiation codon of the bktB gene.

### <Cloning and Construction of Expression Unit of ccr Gene>

A ccr gene coding for an enzyme that converts crotonyl-CoA into butyryl-CoA that is a precursor of 3HH monomer was cloned from a chromosomal DNA of a Streptomyces cinnamonensis Okami strain (DSM 1042). PCR was carried out using DNAs set out in SEQ ID NO: 7 and SEQ ID NO: 8 as a primer. The PCR condition involved (1) at 98°C for 2 min, followed by repeating 25 cycles of (2) at 94°C for 10 sec, at 55°C for 20 sec and at 68°C for 90 sec, and KOD-plus- was used as a polymerase. After the fragment amplified by PCR was purified, it was cleaved with restriction enzymes BamHI and AflII. An EE32d13 fragment (J. Bacteriol., 179, 4821 (1997)) was subcloned into a pUC19 vector at an EcoRI site, and this plasmid was cleaved with BglII and AflII to construct a ccr expression unit by replacing the fragment with a ccr gene provided as a BamHI and AflII fragment.

### <Cloning and Preparation of Expression Unit of phaC Gene>

A phaC expression unit including a sequence set out in SEQ ID NO: 11 was prepared as a SpeI fragment. PCR was carried out using primers set out in SEQ ID NO: 9 and SEQ ID NO: 10, with HG::PRe-N149S/D171G-T/pBlu disclosed in JP-A No. 2007-228894, paragraph No. [0031] as a template. The PCR conditions involved (1) at 98°C for 2 min, followed by repeating 25 cycles of (2) at 94°C for 10 sec, at 55°C for 30 sec and at 68°C for 2 min, and KOD-plus- was used as a polymerase. After the fragment amplified by the PCR was purified, it was cleaved with a restriction enzyme SpeI to prepare an expression unit.

An expression vector pCUP2-631 was constructed as follows.

As a plasmid vector for construction of an expression vector in C. necator, pCUP2 disclosed in International Publication No. WO/2007/049716, paragraph No. [0041] was used. First, the ccr gene expression unit constructed in Example 7 was excised by a treatment with EcoRI, and this fragment was ligated to pCUP2 which had been cleaved with MunI. Next, the phaC expression unit produced in Example 8 was prepared as an SpeI fragment, and inserted into pCUP2 including the ccr gene expression unit at its SpeI site to construct a pCUP2-631 vector.

### <Production of Transformant>

Introduction of the pCUP2-631 vector into a variety of cells was carried out by electrophoresis as in the following. Gene Pulser manufactured by Bio-Rad Laboratories K.K. was used as an apparatus for introducing the gene, in which "gap 0.2 cm" similarly manufactured by Bio-Rad Laboratories K.K. was used as a cuvette. To the cuvette were injected 400 µl of competent cells and 20 µl of the expression vector, and the cuvette was set in the pulse apparatus. Then, an electrical pulse was applied under conditions of an electrostatic capacity of 25 µF, a voltage of 1.5 kV, and a resistance of 800 Ω. After applying the pulse, the bacterial liquid in the cuvette was subjected to shaking culture in a Nutrient Broth medium (manufactured by Difco) at 30°C for 3 hrs, followed by culturing on a selection plate (Nutrient Agar medium (manufactured by Difco), kanamycin 100 mg/L) at 30°C for 2 days to acquire a transformant thus grown.

### <Culture of Transformant>

Culture of the transformant produced as described above was carried out. Composition of the preculture medium included 1 % (w/v) Meat-extract, 1 % (w/v) Bacto-Trypton, 0.2 % (w/v) Yeast-extract, 0.9 % (w/v) Na₂HPO₄·12H₂O and 0.15 % (w/v) KH₂PO₄, and the pH was adjusted to 6.7.

Composition of the medium for producing polyester included 1.1 % (w/v) Na₂HPO₄·12H₂O, 0.19 % (w/v) KH₂PO₄, 0.6 % (w/v) (NH₄)₂SO₄, 0.1 % (w/v) MgSO₄·7H₂O, and a 0.5 % (v/v) solution of trace metal salts (prepared by dissolving 1.6 % (w/v) FeCl₃·6H₂O, 1 % (w/v) CaCl₂H·2H₂O, 0.02 % (w/v) CoCl₂·6H₂O, 0.016 % (w/v) CuSO₄·5H₂O, 0.012 % (w/v) NiCl₂·6H₂O, 0.01 % (w/v) CrCl₃·6H₂O in 0.1 N hydrochloric acid). The culture was conducted by feeding culture while feeding PKOO (Palm kernel olein; palm kernel oil olein fraction) as a carbon source.

A glycerol stock of each transformant was inoculated into the preculture medium, and cultured for 20 hrs. Thereafter, the culture of 10% (v/v) was inoculated into a 5 L jar fermenter (manufactured by B. E. MARUBISHI Co., Ltd., model MD-500) charged with 2.5 L of the polyester-producing culture medium. The operating conditions involved a culture temperature of 28°C, an agitating speed of 420 rpm, and a ventilation volume of 0.6 vvm, and the pH was controlled to be from 6.6 to 6.8. For the control, 14% aqueous ammonia was used. The culture was conducted for upto 65 hrs. Following the culture, bacterial cells were recovered by centrifugal separation, washed with methanol, and lyophilized to obtain PHBH.

Analysis of the 3HH composition of the produced polyester was carried out by determination with gas chromatography as in the following. To about 20 mg of dried PHBH were added 2 ml of a sulfuric acid-methanol mixed liquid (15:85) and 2 ml of chloroform. The vessel was tightly sealed, and heated at 100°C for 140 min to obtain a methyl ester of PHBH decomposition product. After cooling, thereto was added 1.5 g of sodium bicarbonate in small portions to neutralize the mixture, which was left to stand until generation of carbon dioxide gas ceased. After adding 4 ml of diisopropyl ether and mixing well, centrifugal separation was carried out. The monomer unit composition of the PHBH decomposition product in the supernatant was analyzed by capillary gas chromatography. The gas chromatograph employed was Shimadzu Corporation GC-17A, using a capillary column manufactured by GL Science Inc., NEUTRA BOND-1 (column length: 25 m, column internal diameter: 0.25 mm, liquid film thickness: 0.4 µm). Helium (He) was used as a carrier gas, with the column inlet pressure being 100 kPa, and the sample was injected in a volume of 1 µl. With respect to the temperature conditions, the temperature was elevated from the initial temperature of from 100°C to 200°C at a rate of 8°C/min, and further elevated from 200°C to 290°C at a rate of 30°C/min. As a result of analysis under the aforementioned conditions, PHBH was reveled to have the 3HH composition of 12 mol%. The weight average molecular weight was about 660,000, and the Tg was 0°C.

### (Production Example 2) Production of PHBH Having a 3HH Proportion of 7 mol%

PHBH was produced in a similar manner to Production Example 1 except that the carbon source was changed to POO (Palm Olein Oil). Thus obtained PHBH had a 3HH proportion of 7 mol% as a result of a similar analysis to Production Example 1, a weight average molecular weight of about 740,000, and Tg of 2°C.

### (Examples 1 to 13) Production of Resin Compositions and Production of Sheets at a Molding Temperature of 135°C

After each component was blended according to the blend ratio shown in Table 1, the blend was subjected to melt kneading using a biaxial extrusion molding machine (manufactured by Japan Steel Works, Ltd., TEX30α) at a cylinder preset temperature of 130°C to obtain a pelletized resin composition. The obtained pellet of the resin composition was extruded using an uniaxial extruder Laboplastmill (manufactured by Toyo Seiki Seisaku-sho, Ltd., type 20C200) equipped with a T-die having a width of 150 mm and a lip width of 0.25 mm under conditions of a molding temperature of 135°C and a screw rotation speed of 80 rpm, and was taken up with a cooling roller adjusted to have a temperature of 60°C to obtain a sheet. Whereas, the limiting take-up speed was determined at which the sheet became releasable from the cooling roller. Additionally, the tear strength and the tensile elongation at break of the obtained sheet were evaluated. The results are shown in Table 1.

### (Comparative Example 1)

A resin composition was obtained in a similar manner to Examples 1 to 13 except that both PHBH and stearic acid amide were not used, and the amount of PBAT blended was changed to 100 parts by weight. A sheet was obtained from the resulting pellet of the resin composition in a similar manner to Examples 1 to 13. Whereas, the limiting take-up speed was determined at which the sheet became releasable from the cooling roller. In addition, the tear strength and the tensile elongation at break of the obtained sheet were evaluated. The results are shown in Table 1.

### (Comparative Example 2)

A resin composition was obtained in a similar manner to Examples 1 to 13 except that: PBAT was not used; the amount of PHBH blended was changed to 100 parts by weight; and the amount of stearic acid amide blended was changed to 5 parts by weight. A sheet was obtained from the pellet of the resulting resin composition in a similar manner to Examples 1 to 13. Whereas, the limiting take-up speed was determined at which the sheet became releasable from the cooling roller. In addition, the tear strength and the tensile elongation at break of the obtained sheet were evaluated. The results are shown in Table 1.

### (Comparative Example 3)

A resin composition was obtained in a similar manner to Examples 1 to 13 except that PBAT and stearic acid amide were not used, and the amount of PHBH blended was changed to 100 parts by weight. Although production of a sheet was attempted from the pellet of the obtained resin composition similarly to Examples 1 to 13, belated crystallizing and hardening as well as inferior releasability were exhibited, and thus the extruded sheet curled up on the cooling roller, leading to failure in taking up.

**[Table 1]**

| Evaluation of Sheet Formed at a Molding | | | | | | | | | | | | | | | | | |
|---|---|---|---|---|---|---|---|---|---|---|---|---|---|---|---|---|---|
| Temperature of 135°C | | | | | | | | | | | | | | | | | |
| | | Example | | | | | | | | | | | | | Comparative Example | | |
| | | 1 | 2 | 3 | 4 | 5 | 6 | 7 | 8 | 9 | 10 | 11 | 12 | 13 | 1 | 2 | 3 |
| Blend (parts by weight) | PHBH (3HH: 12 mol%, Tg: 0°C) | 25 | 25 | 25 | 25 | 50 | 50 | 50 | 75 | 75 | 75 | 75 | 50 | 50 | | 100 | 100 |
| | PBAT (Tg: -30°C) | 75 | 75 | 75 | 75 | 50 | 50 | 50 | 25 | 25 | 25 | 25 | 50 | 50 | 100 | | |
| | Behenic acid amide | | | | | | | | | | | | 1 | 2.5 | | | |
| | Stearic acid amide | 0.5 | 1 | 1.3 | 2.5 | | 1 | 2.5 | 1 | 1.5 | 2.5 | 3.8 | | | | 5 | |
| Formability Limiting | take-up speed (m/min) | >9 | >9 | >9 | >9 | 4 | 8 | >9 | 7 | 7 | >9 | >9 | >9 | >9 | 2 | >9 | failed |
| Physical properties of sheet | Tear strength at break (N/mm) | 119 | 116 | 112 | 111 | 116 | 118 | 118 | 108 | 109 | 108 | 103 | 116 | 111 | 98 | 71 | - |
| | Tensile elongation (%) | 440 | 561 | 437 | 504 | 483 | 465 | 422 | 493 | 459 | 491 | 476 | 440 | 419 | 408 | 303 | - |
| Polymer biomass content (%) | | 25 | 25 | 25 | 25 | 50 | 50 | 50 | 75 | 75 | 75 | 75 | 50 | 50 | 0 | 100 | 100 |

### (Examples 14 to 26) Production of Resin Composition and Production of Sheet at a Molding Temperature of 140°C

Sheets were obtained in a similar manner to Examples 1 to 13 from the pellet of the resin composition obtained in Examples 1 to 13, except that the molding temperature was changed to 140°C. Whereas, the limiting take-up speed was determined at which the sheet became releasable from the cooling roller. In addition, the tear strength and the tensile elongation at break of the obtained sheets were evaluated. The results are shown in Table 1.

### (Comparative Examples 4 to 6) Production of Resin Composition and Production of Sheet at a Molding Temperature of 140°C

Sheets were obtained in a similar manner to Comparative Examples 1 to 3 from the pellet of the resin composition obtained in Comparative Examples 1 to 3, except that the molding temperature was changed to 140°C. Whereas, the limiting take-up speed was determined at which the sheet became releasable from the cooling roller. In addition, the tear strength and the tensile elongation at break of the obtained sheets were evaluated. The results are shown in Table 1. However, the pellet of the resin composition of Comparative Example 6 exhibited belated crystallizing and hardening as well as inferior releasability, and thus the extruded sheet curled up on the cooling roller, leading to failure in taking up.

**[Table 2]**

| Evaluation of Sheet Formed at a Molding | | | | | | | | | | | | | | | | | |
|---|---|---|---|---|---|---|---|---|---|---|---|---|---|---|---|---|---|
| Temperature of 104°C | | | | | | | | | | | | | | | | | |
| | | Example | | | | | | | | | | | | | Comparative Example | | |
| | | 14 | 15 | 16 | 17 | 18 | 19 | 20 | 21 | 22 | 23 | 24 | 25 | 26 | 4 | 5 | 6 |
| Blend (parts by weight) | PHBE (3HH: 12 mol%, Tg: 0°C) | 25 | 25 | 25 | 25 | 50 | 50 | 50 | 75 | 75 | 75 | 75 | 50 | 50 | | 100 | 100 |
| | FBAT (Tg: -30°C) | 75 | 75 | 75 | 75 | 50 | 50 | 50 | 25 | 25 | 25 | 25 | 50 | 50 | 100 | | |
| | Behenic acid amide | | | | | | | | | | | | 1 | 2.5 | | | |
| | Stearic acid amide | 0.5 | 1 | 1.3 | 2.5 | | 1 | 2.5 | 1 | 1.5 | 2.5 | 3.8 | | | | 5 | |
| Formability | Limiting take-up speed (m/min) | 8 | >9 | >9 | >9 | 2 | 4 | >9 | 6 | 5 | >9 | >9 | >9 | >9 | 2 | 3 | failed |
| Physical properties of sheet | Tear strength (N/mm) | 119 | 115 | 112 | 112 | 119 | 119 | 116 | 106 | 107 | 107 | 102 | 118 | 110 | 100 | 70 | - |
| | Tensile elongation at break (%) | 588 | 532 | 622 | 581 | 492 | 457 | 502 | 431 | 481 | 490 | 426 | 484 | 513 | 412 | 273 | - |
| Polymer biomass content (%) | | 25 | 25 | 25 | 25 | 50 | 50 | 50 | 75 | 75 | 75 | 75 | 50 | 50 | 0 | 100 | 100 |

### (Examples 27 to 39) Production of Resin Composition and Production of Sheet at a Molding Temperature of 145°C

Sheets were obtained in a similar manner to Examples 1 to 13 from the pellet of the resin composition obtained in Examples 1 to 13, except that the molding temperature was changed to 145°C. Whereas, the limiting take-up speed was determined at which the sheet became releasable from the cooling roller. In addition, the tear strength and the tensile elongation at break of the obtained sheets were evaluated. The results are shown in Table 1.

### (Comparative Examples 7 to 9) Production of Resin Composition and Production of Sheet at a Molding Temperature of 145°C

Sheets were obtained in a similar manner to Comparative Examples 1 to 3 from the pellet of the resin composition obtained in Comparative Examples 1 to 3, except that the molding temperature was changed to 145°C. Whereas, the limiting take-up speed was determined at which the sheet became releasable from the cooling roller. In addition, the tear strength and the tensile elongation at break of the obtained sheets were evaluated. The results are shown in Table 1. However, the pellet of the resin composition of Comparative Example 9 exhibited belated crystallizing and hardening as well as inferior releasability, and thus the extruded sheet curled up on the cooling roller, leading to failure in taking up.

**[Table 3]**

| Evaluation of Sheet Formed at a Molding | | | | | | | | | | | | | | | | | |
|---|---|---|---|---|---|---|---|---|---|---|---|---|---|---|---|---|---|
| Temperature of 145°C | | | | | | | | | | | | | | | | | |
| | | Example | | | | | | | | | | | | | Comparative Example | | |
| | | 27 | 28 | 29 | 30 | 31 | 32 | 33 | 34 | 35 | 36 | 37 | 38 | 39 | 7 | 8 | 9 |
| Blend (parts by weight | PHBH (3HH: 12mol%, Tg: 0°C) | 25 | 25 | 25 | 25 | 50 | 50 | 50 | 75 | 75 | 75 | 75 | 50 | 50 | | 100 | 100 |
| | PBAT (Tg:-30°C) | 75 | 75 | 75 | 75 | 50 | 50 | 50 | 25 | 25 | 25 | 25 | 50 | 51 | 100 | | |
| | Behenic acid amide | | | | | | | | | | | | 1 | 2.5 | | | |
| | Stearic acid amide | 0.5 | 1 | 1.3 | 2.5 | | 1 | 2.5 | 1 | 1.5 | 2.5 | 3.8 | | | | 5 | |
| formability | Limiting take-up speed (m/min) | 7 | >9 | >9 | >9 | 1 | 2 | >9 | 6 | 4 | >9 | >9 | >9 | >9 | 1 | 1 | failed |
| Physical properties of sheet | Tear strength (N/mm) | 118 | 115 | 110 | 111 | 115 | 117 | 117 | 107 | 106 | 107 | 103 | 118 | 113 | 99 | 68 | - |
| | Tensile elongation at break (%) Tensile elongation at break (%) | 560 | 562 | 645 | 713 | 529 | 514 | 508 | 520 | 498 | 490 | 415 | 529 | 535 | 373 | 298 | - |
| Polymer biomass content (%) | | 25 | 25 | 25 | 25 | 50 | 50 | 50 | 75 | 75 | 75 | 75 | 50 | 50 | 0 | 100 | 100 |

### (Examples 40 to 47) Production of Resin Composition and Production of Sheet at a Molding Temperature of 145°C

Sheets were obtained in a similar manner to Examples 1 to 13 except that each component was blended according to the blend ratio shown in Table 4 and the molding temperature was changed to 145°C. Whereas, the limiting take-up speed was determined at which the sheet became releasable from the cooling roller. In addition, the tear strength and tensile elongation at break of the obtained sheets were evaluated. The results are shown in Table 4.

### (Comparative Examples 10 to 12) Production of Resin Composition and Production of Sheet at a Molding Temperature of 145°C

Sheets were obtained in a similar manner to Examples 40 to 47 except that each component was blended according to the blend ratio shown in Table 4. Whereas, the limiting take-up speed was determined at which the sheet became releasable from the cooling roller. In addition, the tear strength and the tensile elongation at break of the obtained sheets were evaluated. The results are shown in Table 4.

**[Table 4]**

| Evaluation of Sheet Formed at a Molding Temperature | | | | | | | | | | | | |
|---|---|---|---|---|---|---|---|---|---|---|---|---|
| of 145°C | | | | | | | | | | | | |
| | | Example | | | | | | | | Comparative Example | | |
| | | 40 | 41 | 42 | 43 | 44 | 45 | 46 | 47 | 10 | 11 | 12 |
| Blend (parts by weight) | PHBH (3HH: 7mol%, Tg: 2°C) | 25 | 25 | 40 | 50 | 50 | 60 | 75 | 75 | | 100 | 100 |
| | PBAT (Tg: -30°C) | 75 | 75 | 60 | 50 | 50 | 40 | 25 | 25 | 100 | | |
| | Stearic acid amide | 0.3 | 0.5 | 1 | 0.5 | 1 | 1 | 0.8 | 1.5 | | 5 | |
| formability | Limiting take-up speed (m/min) | 6 | 6 | >9 | 2 | >9 | >9 | 4 | >9 | 1 | >9 | 2 |
| Physical properties of sheet | Tear strength (N/mm) | 131 | 119 | 130 | 151 | 154 | 146 | 109 | 123 | 99 | 76 | 79 |
| | Tensile elongation at break (%) | 561 | 539 | 538 | 451 | 464 | 441 | 422 | 404 | 373 | 23 | 32 |
| Polymer biomass content (%) | | 25 | 25 | 40 | 50 | 50 | 60 | 75 | 75 | 0 | 100 | 100 |

### (Examples 48 to 55) Production of Resin Composition and Production of Sheet at a Molding Temperature of 150°C

Sheets were obtained in a similar manner to Examples 40 to 47 from the pellet of the resin composition obtained in Examples 40 to 47, except that the molding temperature was changed to 150°C. Whereas, the limiting take-up speed was determined at which the sheet became releasable from the cooling roller. In addition, the tear strength and the tensile elongation at break of the obtained sheets were evaluated. The results are shown in Table 5.

### (Comparative Examples 13 to 15) Production of Resin Composition and Production of Sheet at a Molding Temperature of 150°C

Sheets were obtained in a similar manner to Comparative Examples 10 to 12 from the pellet of the resin composition obtained in Comparative Examples 10 to 12, except that the molding temperature was changed to 150°C. Whereas, the limiting take-up speed was determined at which the sheet became releasable from the cooling roller. In addition, the tear strength and the tensile elongation at break of the obtained sheets were evaluated. The results are shown in Table 5.

**[Table 5]**

| Evaluation of Sheet Formed at a Molding Temperature of 150°C | | | | | | | | | | | | |
|---|---|---|---|---|---|---|---|---|---|---|---|---|
| | | Example | | | | | | | | Comparative Example | | |
| | | 48 | 49 | 50 | 51 | 52 | 53 | 54 | 55 | 13 | 14 | 15 |
| Blend (parts by weight) | PHBH (3HH: 7 mol%, Tg: 2°C) | 25 | 25 | 40 | 50 | 50 | 60 | 75 | 75 | | 100 | 100 |
| | PBAT (Tg: -30°C) | 75 | 75 | 60 | 50 | 50 | 40 | 25 | 25 | 100 | | |
| | Stearic acid amide | 0.3 | 0.5 | 1 | 0.5 | 1 | 1 | 0.8 | 1. 5 | | 5 | |
| Formability | Limiting take-up speed (m/min) | 5 | 6 | >9 | 1 | >9 | >9 | 3 | >9 | 1 | >9 | 2 |
| Physical properties of sheet | Tear strength (N/mm) | 116 | 118 | 136 | 154 | 151 | 146 | 121 | 124 | 96 | 74 | 77 |
| | Tensile elongation at break (%) | 530 | 590 | 511 | 466 | 463 | 455 | 417 | 416 | 389 | 21 | 29 |
| Polymer biomass content (%) | | 25 | 25 | 40 | 50 | 50 | 60 | 75 | 75 | 0 | 100 | 100 |

### (Examples 56 to 63) Production of Resin Composition and Production of Sheet at a Molding Temperature of 155°C

Sheets were obtained in a similar manner to Examples 40 to 47 from the pellet of the resin composition obtained in Examples 40 to 47, except that the molding temperature was changed to 155°C. Whereas, the limiting take-up speed was determined at which the sheet became releasable from the cooling roller. In addition, the tear strength and the tensile elongation at break of the obtained sheets were evaluated. The results are shown in Table 6.

### (Comparative Examples 16 to 18) Production of Resin Composition and Production of Sheet at a Molding Temperature of 155°C

Sheets were obtained in a similar manner to Comparative Examples 10 to 12 from the pellet of the resin composition obtained in Comparative Examples 10 to 12, except that the molding temperature was changed to 155°C. Whereas, the limiting take-up speed was determined at which the sheet became releasable from the cooling roller. In addition, the tear strength and the tensile elongation at break of the obtained sheets were evaluated. The results are shown in Table 6.

**[Table 6]**

| Evaluation of Sheet Formed at a Molding | | | | | | | | | | | | |
|---|---|---|---|---|---|---|---|---|---|---|---|---|
| Temperature of 155°C | | | | | | | | | | | | |
| | | Example | | | | | | | | Comparative Example | | |
| | | 56 | 57 | 58 | 59 | 60 | 61 | 62 | 63 | 16 | 17 | 18 |
| Blend by weight) | PHBH (3HH: 7 mol %, Tg: 2°C) (parts | 25 | 25 | 40 | 50 | 50 | 60 | 75 | 75 | | 100 | 100 |
| | PBAT (Tg: -30°C) | 75 | 75 | 60 | 50 | 50 | 40 | 25 | 25 | 100 | | |
| | Stearic acid amide | 0.3 | 0.5 | 1 | 0.5 | 1 | 1 | 0.8 | 1.5 | | 5 | |
| formability | Limiting take-up speed (m/min) | 4 | 5 | >9 | 1 | >9 | >9 | 2 | >9 | 1 | >9 | 1 |
| Physical properties of sheet | Tear strength (N/mm) | 117 | 122 | 134 | 145 | 156 | 146 | 112 | 125 | 93 | 74 | 73 |
| | Tensile elongation at break (%) | 605 | 569 | 530 | 480 | 498 | 502 | 435 | 425 | 391 | 21 | 26 |
| Polymer biomass content (%) | | 25 | 25 | 40 | 50 | 50 | 60 | 75 | 75 | 0 | 100 | 100 |

### INDUSTRIAL APPLICABILITY

According to the present invention, a resin composition and a formed sheet product having a high biomass content can be provided.

## Claims

1. A resin composition comprising a petroleum derived resin having a glass transition temperature (hereinafter, referred to as Tg) of not higher than 10°C, and a nonpetroleum derived resin having a Tg of not higher than 10°C.

2. The resin composition according to claim 1, wherein the petroleum derived resin is a petroleum derived biodegradable resin.

3. The resin composition according to claim 2, wherein the petroleum derived biodegradable resin is at least one selected from the group consisting of polybutylene adipate terephthalate, polybutylene succinate adipate, polybutylene succinate, and polycaprolactone.

4. The resin composition according to any one of claims 1 to 3, wherein the nonpetroleum derived resin is a nonpetroleum derived biodegradable resin.

5. The resin composition according to claim 4, wherein the nonpetroleum derived biodegradable resin is an aliphatic polyester copolymer having a repeating unit represented by the formula: [-CHR-CH₂-CO-O-], wherein, R represents an alkyl group represented by CₙH₂ₙ₊₁, and n is an integer of 1 to 15.

6. The resin composition according to claim 5, wherein the aliphatic polyester copolymer is poly(3-hydroxybutyrate-co-3-hydroxyhexanoate).

7. The resin composition according to claim 6, wherein the composition ratio of the copolymerization components of the poly(3-hydroxybutyrate-co-3-hydroxyhexanoate) is poly(3-hydroxybutyrate)/ poly(3-hydroxyhexanoate) = 99/1 to 80/20 (mol/mol).

8. The resin composition according to any one of claims 1 to 7, further comprising a fatty acid amide.

9. The resin composition according to claim 8, wherein content of the fatty acid amide is 0.1 parts by weight to 10 parts by weight relative to 100 parts by weight of the nonpetroleum derived resin.

10. The resin composition according to claim 8 or 9, wherein the fatty acid amide is at least one selected from the group consisting of behenic acid amide and stearic acid amide.

11. A sheet produced by subjecting the resin composition according to any one of claims 1 to 10 to a forming processing.
